# EUROPÄISCHE PATENTSCHRIFT

(11) **EP 3 536 580 B1**
(45) Veröffentlichungstag und Bekanntmachung des Hinweises auf die Patenterteilung: **13.10.2021**
(21) Anmeldenummer: 19159921.6
(22) Anmeldetag: 28.02.2019
(51) Int. Cl.: B62D 5/00, B62D 15/02

(54) **LENKSYSTEM**
STEERING SYSTEM
SYSTÈME DE DIRECTION

(30) Priorität: 07.03.2018 DE 102018203422
(43) Veröffentlichungstag der Anmeldung: 11.09.2019
(73) Patentinhaber: AUDI AG, 85045 Ingolstadt (DE)
(72) Erfinder: Klinger, Thomas, 85055 Ingolstadt (DE)

(56) Entgegenhaltungen:
- WO-A1-2016/023691
- DE-A1-102007 043 135
- DE-C1- 19 539 101
- US-A1- 2016 368 522
- US-A1- 2016 375 926

## Beschreibung

Die Erfindung betrifft ein Lenksystem gemäß dem Oberbegriff des Patentanspruchs 1.

Lenkanordnungen sind im Allgemeinen derart konfiguriert, dass ein Lenkelement und ein Lenkbetätigungsmechanismus zu jeder Zeit mechanisch miteinander gekoppelt sind. In den letzten Jahren wurde jedoch eine Vielzahl von Lenksystemen vorgeschlagen und realisiert, bei denen zwischen einem gekoppelten Zustand, in dem ein Lenkelement und ein Lenkbetätigungsmechanismus mechanisch miteinander gekoppelt sind, und einem entkoppelten Zustand, in dem das Lenkelement und der Lenkbetätigungsmechanismus mechanisch voneinander entkoppelt sind, umgeschaltet werden kann. Im entkoppelten Zustand werden entweder Drehbewegungen am Lenkelement über Sensoren abgetastet und über ein Steuersystem und von diesem angesteuerte Aktoren in eine Lenkbewegung des Lenkbetätigungsmechanismus umgesetzt oder das Steuersystem generiert aufgrund von Sensordaten selbständig Lenkbefehle und setzt diese durch Ansteuerung der Aktoren in eine Lenkbewegung des Lenkbetätigungsmechanismus um. Der entkoppelte Zustand wird üblicherweise als Steer-by-Wire Konfiguration bezeichnet und kommt zum Einsatz, wenn zum Beispiel die Lenkcharakteristik geschwindigkeitsabhängig geändert werden soll, wenn ein Lenkeingriff in vom Fahrer nicht beherrschbaren Situationen, zum Beispiel zur Vermeidung von Unfällen, vorgenommen werden muss oder wenn zur Komfortsteigerung ein Fahrmanöver selbständig von dem Fahrzeug ausgeführt werden soll, wie zum Beispiel ein automatisches Einparken in eine Parklücke.

Im Allgemeinen werden in den Fällen, in denen die Steer-by-Wire Konfiguration aktiv ist, die tatsächlichen Lenkbewegungen des Fahrzeugs als Feedback für den Fahrer über Servoantriebe in eine Stellung des Lenkelementes umgesetzt.

Ein Lenksystem der vorstehend genannten Art, das über eine Kupplungsanordnung zum bedarfsweisen Verbinden eines Lenkelementes mit einem Lenkbetätigungsmechanismus verfügt, ist beispielsweise in der EP 3 202 641 A1 sowie der US 2017/0217475 A1 beschrieben. Dort wird vorgeschlagen, ein Lenksystem bereitzustellen, das einen ersten Teil einer Lenkwelle, der mit einem Lenkelement verbunden ist, mittels einer schaltbaren Kupplung mit einem zweiten Teil einer Lenkwelle, der mit einem Lenkbetätigungsmechanismus verbunden ist, bedarfsweise koppelt oder entkoppelt. Im entkoppelten Normalbetrieb erfolgt das Lenken mittels einer Steuereinheit auf der Basis von Sensordaten, wobei die Steuereinheit den Lenkeinschlag mittels eines von ihr angesteuerten Motors, der auf den Lenkbetätigungsmechanismus wirkt, einstellt. Auf den ersten Teil der Lenkwelle, der mit dem Lenkelement verbunden ist, wirkt eine Feedback-Einheit in Form eines von der Steuereinheit auf der Basis von Sensordaten gesteuerten Servoantriebs, wodurch der das Lenkelement betätigenden Person ein Lenkgefühl vermittelt wird.

Diese der Rückmeldung in Form einer Kraftrückkopplung dienenden Servoantriebe sind jedoch teuer und benötigen einen erheblichen Bauraum. Es besteht daher der Wunsch nach einer einfachen kostengünstigen Lösung.

Aus der WO 2016/023691 A1 ist eine gattungsgemäße Fahrzeug-Lenkung bekannt. Aus der DE 10 2007 043 135 A1 ist ein Fahrzeuglenksystem sowie ein Verfahren zur Ansteuerung eines Fahrzeuglenksystems bekannt.

Ausgehend von dem vorstehend genannten Stand der Technik ist es Aufgabe der Erfindung, unter Vermeidung der vorstehend genannten Nachteile, insbesondere unter Verzicht auf eine aktive Rückmeldeeinheit, ein Lenksystem anzugeben, das von einer Steuereinheit gesteuerte Lenkeingriffe erlaubt, ohne dass das Entkoppeln des Lenkelementes vom Lenkbetätigungsmechanismus für die das Lenkelement betätigenden Person als abrupt widerstandslos betätigbares Lenkelement spürbar wird.

Die Aufgabe ist durch die Merkmale des Anspruchs 1 gelöst. Vorteilhafte Ausgestaltungen sind in den abhängigen Ansprüchen offenbart.

Ausgegangen wird von einem Lenksystem für ein Fahrzeug, umfassend eine Eingangswelle, über die eine Lenkkraft von einem Lenkelement eingebbar ist, eine Ausgangswelle, die auf einen Lenkbetätigungsmechanismus wirkt, eine Kupplung, um die Eingangswelle und die Ausgangswelle miteinander zu verbinden und voneinander zu trennen und wenigstens einen Aktor, mittels dem die Kupplung antreibbar ist, um die Eingangswelle und die Ausgangswelle miteinander zu koppeln und zu entkoppeln. Derartige Anordnungen sind in Verbindung mit Steer-by-Wire Konfiguration bekannt und schaffen die Voraussetzung, dass die Ausgangswelle im entkoppelten Zustand relativ zur Eingangswelle unabhängig drehbar ist, derart, dass ein von einer Steuereinheit steuerbarer Steer-by-Wire Antrieb gesteuert durch eine Steuereinheit auf den Lenkbetätigungsmechanismus den Lenkwinkel bestimmend einwirkt. Bei derartigen Lenksystemen ist üblicherweise eine Sicherheitsfunktion vorgesehen, auf die das Lenksystem bei Ausfall der Steer-by-Wire Funktion zurückfallen kann und bei der die Eingangswelle und die Ausgangswelle drehfest gekoppelt sind.

Bei der erwähnten Steuereinheit handelt es sich wie heute üblich um eine rechnergestützte Steuereinheit, die über Sensoren Daten ermittelt, diese programmgestützt verarbeitet und in Abhängigkeit von den Verarbeitungsergebnissen Aktoren ansteuert. Nachdem derartige Steuereinheiten allgemein bekannt sind, erübrigt es sich auf deren Aufbau näher einzugehen.

Zur Lösung der Aufgabe wird vorgeschlagen das Lenksystem so auszubilden, dass die Kupplung mittels des durch die Steuereinheit gesteuerten wenigstens einen Aktors in zwei diskrete Schaltzustände bringbar ist, wobei die Kupplung im ersten Schaltzustand die Eingangswelle und die Ausgangswelle drehfest miteinander verbindet und im zweiten Schaltzustand die Eingangswelle einerseits von der Ausgangswelle entkoppelt und andererseits die Eingangswelle durch direkte oder indirekte Kopplung relativ zu einem feststehenden Teil des Fahrzeug, zum Beispiel zur Fahrzeugkarosserie festlegt. Weiter wird vorgeschlagen, dass die Ausgangswelle nur im zweiten Schaltzustand unabhängig von der Eingangswelle mittels des Steer-by-Wire Antriebs gesteuert durch die Steuereinheit drehbar ist. Durch das vorgeschlagene Lenksystem wird vorteilhaft eine Steer-by-Wire Funktion ermöglicht, bei der eine Rückmeldung mittels eines Servoantriebs kosten- und platzeinsparend entfällt und dennoch eine Rückmeldung in Form einer Kraftrückkopplung gegeben ist. Insbesondere wird erreicht, dass das Lenkrad zu keinem Zeitpunkt lose drehbar ist, so dass ein Unsicherheitsgefühl für den Fahrer vorteilhaft vermieden wird.

Erfindungsgemäß ist die direkte oder indirekte Kopplung zwischen der Eingangswelle und dem feststehenden Teil des Fahrzeug im zweiten Schaltzustand mittels wenigstens eines zwischen der Eingangswelle und dem feststehenden Teil des Fahrzeug wirkenden Federmechanismus drehweich ausgebildet, derart, dass die Eingangswelle mittels des mit ihr verbundenen Lenkelementes um einen vorgegebenen Winkelbetrag in beide Drehrichtungen gegen die Kraft des wenigstens einen Federelementes drehbar ist und bei Drehung über diesen Winkelbetrag hinaus an mit dem feststehenden Teil des Fahrzeug direkt oder indirekt verbundene Anschläge gelangt. Durch diese Ausgestaltung wird eine vom Drehwinkel der Eingangswelle und damit des Lenkelementes, zum Beispiel eines Lenkrades, abhängige Kraftrückmeldung erreicht, wenn die Steer-by-Wire Funktion eingeschaltet wird oder anliegt. Dies vermittelt dem Fahrer deutlich mehr Sicherheit, als ein abrupt blockiertes oder gar ein lose drehbares Lenkelement. Besonders bewährt hat es sich, wenn der vorgegebene Winkelbetrag größer als 5° und kleiner als 30°, bevorzugt größer als 5° und kleiner als 20°, höchst bevorzugt größer als 5° und kleiner als 15° ist.

Um vorteilhaft sicherzustellen, dass das Lenkelement zu keinem Zeitpunkt lose drehbar ist, ist die Kupplung so ausgebildet, dass sie beim Übergang vom ersten Schaltzustand in den zweiten Schaltzustand in einem während des Umschaltens dynamisch durchlaufenen Zwischenbereich zwischen dem ersten Schaltzustand und dem zweiten Schaltzustand die Eingangswelle und die Ausgangswelle drehfest miteinander verbindet und die Eingangswelle relativ zu einem feststehenden Teil des Fahrzeug, zum Beispiel zur Fahrzeugkarosserie festlegt, derart, dass die Eingangswelle zu keinem Zeitpunkt frei drehbar ist. Das Durchlaufen des Übergangsbereiches ist dabei vorteilhaft zeitlich so bemessen, dass bei einem Schaltvorgang von dem ersten Schaltzustand in den zweiten Schaltzustand, bei Anliegen einer Lenkkraft an der Eingangswelle, die mit der Fahrzeugkarosserie gekoppelte Eingangswelle nicht an die Anschläge gelangt. Auf diese Weise wird die Kraftrückkopplung auf die Eingangswelle beim Umschalten von der Direktsteuerung auf die Steer-by-Wire Funktion im Wesentlichen ohne unkomfortable Kraftsprünge am Lenkelement, zum Beispiel dem Lenkrad gestaltet.

In weiterer Ausgestaltung des Lenksystems ist es von Vorteil, dass im Normalbetrieb die Steuereinheit beim Wechsel von dem zweiten Schaltzustand in den ersten Schaltzustand die Winkelstellung der Ausgangswelle auf die Winkelstellung der Eingangswelle synchronisiert, derart, dass der Steer-byWire Antrieb, gesteuert durch die Steuereinheit, den Lenkbetätigungsmechanismus auf die mittels wenigstens eines Sensors ermittelte Winkelstellung der Eingangswelle einstellt und dass dann die Steuereinheit durch Ansteuern des wenigstens einen Aktors die Kupplung in den ersten Schaltzustand bringt. Durch diese Maßnahme kann der Lenkbetätigungsmechanismus und mit ihm zum Beispiel die Räder eines Fahrzeugs, durch die Steuereinheit mittels des Steer-by-Wire Antriebs auf die Stellung eingeregelt werden, die durch die Winkelstellung der Eingangswelle vorgegeben ist, sodass ein verdrehtes Koppeln der Eingangswelle mit der Ausgangswelle sicher verhindert wird. Es ist dabei von Vorteil, wenn das Umschalten von dem zweiten Schaltzustand in den ersten Schaltzustand bei Stillstand der Eingangswelle und bevorzugt des Fahrzeugs erfolgt.

Um bei Anliegen der Steer-by-Wire Funktion eine Absicherung bei deren Ausfall bereitzuhalten ist es von Vorteil, eine Notumschaltung von dem zweiten Schaltzustand in den ersten Schaltzustand vorzusehen, wobei nach Auslösen der Notumschaltung die Steuereinheit, unabhängig von der Winkelstellung der Eingangswelle, durch Ansteuern des wenigstens einen Aktors die Kupplung in den ersten Schaltzustand bringt. Durch diese Maßnahme wird die unterbrechungsfreie Lenkbarkeit des Fahrzeugs auch bei Systemausfall gewährleistet.

Zur Ausgestaltung der Kupplung, die die jeweiligen Verbindungen in dem ersten Schaltzustand oder dem zweiten Schaltzustand herstellt, kann neben einer formschlüssigen Verbindung eine Verbindung per Reibschluss oder per Kraftschluss vorgesehen sein. Selbstverständlich ist auch eine Mischung dieser Verbindungsmöglichkeiten denkbar, zum Beispiel indem die Kopplung zwischen Eingangswelle und Ausgangswelle im ersten Schaltzustand formschlüssig erfolgt und die direkte oder indirekte Verbindung zwischen Eingangswelle und einem feststehenden Teil des Fahrzeug im zweiten Schaltzustand im Wege eines Reibschlusses oder eines Kraftschlusses.

Zur vorteilhaften Ausgestaltung der Kupplung ist vorgesehen, dass diese wenigstens ein Schaltelement aufweist, wobei die Kupplung mittels des wenigstens einen Schaltelementes im ersten Schaltzustand die Eingangswelle und die Ausgangswelle drehfest miteinander verbindet und im zweiten Schaltzustand die Eingangswelle einerseits von der Ausgangswelle entkoppelt und andererseits mittels des wenigstens einen Schaltelementes die Eingangswelle relativ zu einem feststehenden Teil des Fahrzeug, zum Beispiel der Fahrzeugkarosserie festlegt. Das Vorsehen eines einzelnen Schaltelementes, das alle Aufgaben erfüllt, ist aus Kostengründen vorzuziehen, es kann aber auch die konstruktive Notwendigkeit bestehen, für die Kupplung zum Beispiel zwei Schaltelemente vorzusehen, wobei das erste Schaltelement im ersten Schaltzustand die Eingangswelle und die Ausgangswelle drehfest miteinander verbindet und im zweiten Schaltzustand die Verbindung zwischen Eingangswelle und die Ausgangswelle löst und das zweite Schaltelement im zweiten Schaltzustand die Eingangswelle relativ zu einem feststehenden Teil des Fahrzeug festlegt und im ersten Schaltzustand diese Verbindung löst.

Zur Betätigung des wenigstens einen Schaltelementes ist vorteilhaft wenigstens ein Aktor vorgesehen, wobei dieser einen kraftentfaltenden Antrieb aufweist der einer der Gruppen elektrischer Antrieb, mechanischer Antrieb, pneumatischer Antrieb, hydraulischer Antrieb, pyrotechnischer Antrieb oder einer beliebigen Mischform dieser Antriebe angehört. Selbstverständlich können diese Antriebsformen untereinander kombiniert werden. So ist es denkbar im allgemeinen Fall einen elektromagnetischen oder elektromotorischen Antrieb oder wenn entsprechende Kraftquellen vorhanden sind einen pneumatischen oder einen hydraulischen Antrieb vorzusehen, für eine im Wesentlichen verzögerungsfreie und sichere Notumschaltung vom zweiten Schaltzustand in den ersten Schaltzustand kann aber auch zusätzlich ein pyrotechnischer Antrieb vorteilhaft sein.

Weitere Ausgestaltungen und Vorteile der Erfindung werden nachfolgend anhand der Zeichnungen näher erläutert. Es zeigen:
- Fig. 1a bis 1c: eine Prinzipdarstellung der Kupplungsanordnung des Lenksystems in Schnittdarstellung; und
- Fig. 2: eine Prinzipdarstellung des Lenksystems in einem Personenkraftwagen.

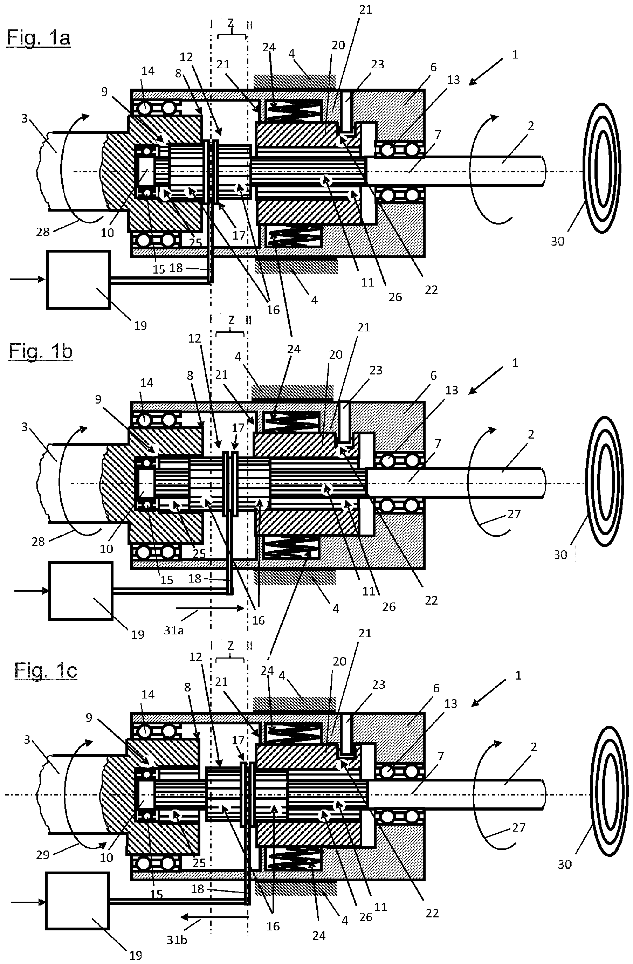

Für die nachfolgende Beschreibung ist angenommen, dass das erfindungsgemäße Lenksystem in einen Personenkraftwagen eingebaut ist. Als Kernstück enthält das Lenksystem eine Kupplung, deren Aufbau und Funktionsweise zunächst anhand des in Fig. 1a bis Fig. 1c dargestellten Beispiels beschrieben ist. Die Ausgestaltung ist dabei stark vereinfacht dargestellt und zeigt nur eine von einer Vielzahl von Realisierungsmöglichkeiten. Dargestellt ist die Anordnung in drei unterschiedlichen Phasen einer Umschaltung von einem ersten Schaltzustand in einen zweiten Schaltzustand. Für gleiche Teile sind gleiche Bezugszeichen verwendet.

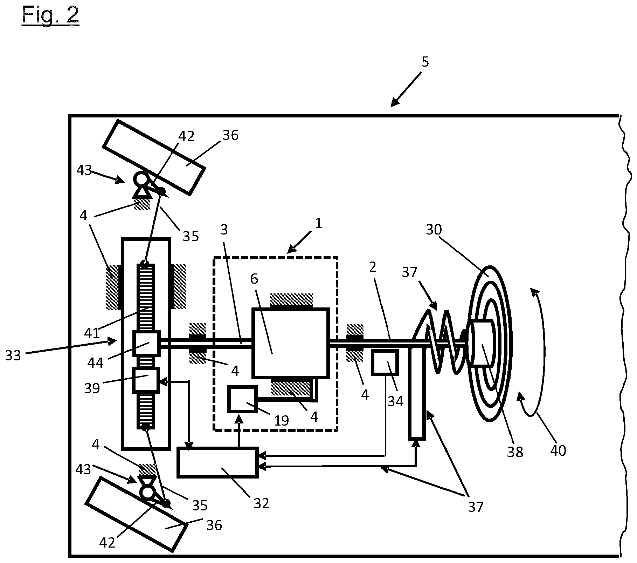

Gemäß den Darstellungen in Fig. 1a bis Fig. 1c dient die Kupplung 1 dazu, eine Eingangswelle 2 in einem ersten Schaltzustand mit einer Ausgangswelle 3 zu verbinden und in einem zweiten Schaltzustand die Verbindung zu lösen und stattdessen die Eingangswelle 2 relativ zur Karosserie 4 des Personenkraftwagens 5 (Fig. 2) festzulegen. Die Kupplung 1 weist ein zylinderförmiges Gehäuse 6 auf, das gestellfest an der Karosserie 4 angeordnet ist. In dem Gehäuse 6 sind koaxial zu dessen Mittelachse 7 die Eingangswelle 2 mittels eines ersten Lagers 13 und die Ausgangswelle 3 mittels eines zweiten Lagers 14 drehbar gelagert. Die Mittelachse 7 ist damit auch Drehachse der Eingangswelle 2 und der Ausgangswelle 3.

An ihrem der Eingangswelle 2 zugewandten Ende 8 weist die Ausgangswelle 3 eine Ausnehmung 9 auf, in der das der Ausgangswelle 3 zugewandte Wellenende 10 der Eingangswelle 2 mittels eines dritten Lagers 15 drehbar gelagert ist. Zu ihrem offenen Ende hin ist die Ausnehmung 9 mit einer Innenverzahnung 25 ausgestattet, die, wie unten näher ausgeführt, mit einer Schalthülse 12 zusammenwirkt.

Die Schalthülse 12 ist auf der Eingangswelle 2, zwischen der Lagerung der Eingangswelle 2 in der Ausgangswelle 3 und ihrer Lagerung in dem Gehäuse 6, axial verschiebbar und drehfest angeordnet. Hierzu ist die Eingangswelle 2 in diesem Bereich mit einer axial verlaufenden Außenverzahnung 11 ausgestattet, die mit einer axial verlaufenden Innenverzahnung (in der Darstellung nicht sichtbar) der Schalthülse 12 korrespondiert und zusammenwirkt. Weiter weist die Schalthülse 12 eine axial verlaufende Außenverzahnung 16 auf, die hinsichtlich ihrer axialen Erstreckung etwa in der Mitte durch eine umlaufende Schaltkulisse 17 in zwei Hälften geteilt ist. In die Schaltkulisse 17 greift ein Schaltfinger 18 ein der, betätigt von einem Aktor 19, parallel zur Mittelachse 7 verschiebbar ist und damit die Schalthülse 12 axial verschiebt. Der Außendurchmesser der Schalthülse 12 und deren Außenverzahnung 16 korrespondieren mit dem Innendurchmesser der Ausnehmung 9 und deren Innenverzahnung 25, derart dass die Schalthülse 12 bei entsprechender axialer Stellung in die Ausgangswelle 3 drehfest eingreift.

Als weiteres Element ist in dem Gehäuse 6 der Kupplung 1 eine zylinderförmige Koppelhülse 20 koaxial zur Mittelachse 7 gelagert. Die Koppelhülse 20 ist durch umlaufende Anformungen 21, ihre radiale Position betreffend im Innern des Gehäuses 6 gehalten und so angeordnet dass sie einen axialen Abstand zum Ende 8 der Ausgangswelle aufweist, der kleiner ist, als die axiale Erstreckung der Schalthülse 12. Die Anformungen 21 und die Mandelfläche der Koppelhülse 20 bilden ein Gleitlager aus, derart, dass die Koppelhülse 20 im Innern des Gehäuses 6 um die Mittelachse 7 drehbar ist. Weiter weist die Koppelhülse 20 an ihrem dem ersten Lager 13 zugewandten Ende eine über einen definierten Winkelbereich auf ihrer Außenseite in Umfangsrichtung verlaufende Nut 22 auf, in die ein das Gehäuse 6 durchsetzender Stift 23 eingreift. Auf diese Weise ist die Koppelhülse 20 in axialer Richtung im Gehäuse 6 fixiert und in Umfangsrichtung innerhalb des durch die Längserstreckung der Nut 22 definierten Winkelbereichs verdrehbar. Der Winkelbereich ist dabei so gewählt, dass die Koppelhülse ausgehend von einer Mittelposition um einen Winkelbetrag von ca. plus/minus 10° im Gehäuse 6 drehbar ist. Weiter weist die Koppelhülse 20 eine Innenverzahnung 26 auf, wobei der Innendurchmesser der Koppelhülse 20 und deren Innenverzahnung 26 mit dem Außendurchmesser der Schalthülse 12 und deren Außenverzahnung 16 korrespondieren, derart dass die Schalthülse 12 bei entsprechender axialer Stellung in die Koppelhülse 20 drehfest eingreift.

Zwischen den Anformungen 21 im Gehäuse 6 sind Federelemente 24 angeordnet, die mit einem ihrer beiden Enden an dem Gehäuse 6 und mit ihrem anderen Ende an der Mandelfläche der Koppelhülse 20 angreifen. Auf diese Weise wird die Koppelhülse 20 hinsichtlich ihres Drehwinkels im nicht mit der Eingangswelle 2 gekoppelten Zustand in beide Drehrichtungen gefedert in der vorstehend erwähnten Mittelposition gehalten. Die Koppelhülse 20 ist somit gegen die Kraft der Federelemente 24, ausgehend von der Mittelposition um einen Betrag von ca. plus/minus 10° im Gehäuse 6 drehbar und gelangt bei einem Drehwinkel größer plus/minus 10° an durch die Längserstreckung der Nut 22 gegebenen Anschläge.

Ausgehend vom vorstehend beschriebenen Aufbau der Kupplung 1 soll nun in Verbindung mit den Darstellungen gemäß Fig. 1a bis Fig. 1c ein Schaltvorgang der Kupplung näher beschrieben werden. Ausgehend von Fig. 1a in der die Kupplung in ihrem ersten Schaltzustand (erste Schaltstellung I) dargestellt ist, erfolgt die Umschaltung über einen im Laufe des Schaltvorganges dynamisch durchlaufenen Zwischenzustand Z, der in Fig. 1b gezeigt ist und endet in einem in Fig. 1c gezeigten zweiten Schaltzustand (zweiten Schaltstellung II). Die Schaltstellungen I und II sind in den Darstellungen durch strichpunktierte Linien angedeutet, dazwischen liegt der Zwischenzustand Z.

Gemäß der Darstellung in Fig. 1a befindet sich der Schaltfinger 18 in der mit I bezeichneten ersten Schaltstellung. In dieser Schaltstellung I ist die mittels des Aktors 19 über den Schaltfinger 18 und die Schaltkulisse 17 axial bewegbare Schaltmuffe in ihrer in der Darstellung linken Endstellung. Dabei greift die Außenverzahnung 16 der Schalthülse 12 in die korrespondiere Innenverzahnung 25 der Ausnehmung 9 ein. Andererseits ist die Schalthülse 12 über ihre Innenverzahnung (in der Darstellung nicht sichtbar) und die korrespondierende Außenverzahnung 11 der Eingangswelle 2 drehfest mit dieser verbunden. Ein gemäß dem Drehmomentpfeil 27 auf die Eingangswelle 2 aufgebrachtes Drehmoment wird demnach 1:1 auf die Ausgangswelle 3 übertragen, wie dies durch den Drehmomentpfeil 28 angedeutet ist. Wird also mittels eines Lenkrades 30 direkt oder indirekt ein Drehmoment gemäß dem Drehmomentpfeil 27 auf die Eingangswelle 2 aufgebracht, dreht sich die Ausgangswelle 3 im Verhältnis 1:1 mit. Durch die Betätigungskraft, die für die Betätigung des von der Ausgangswelle 3 angetriebenen Lenkbetätigungsmechanismus 33 (Fig. 2) erforderlich ist, wird der lenkenden Person (nicht dargestellt) ein natürliches Lenkgefühl vermittelt.

Wird nun der Aktor 19 durch die Steuereinheit 32 (Fig. 2) mit einem Schaltsignal beaufschlagt, bewegt dieser den Schaltfinger 18 und damit die Schalthülse 12 in der Darstellung gemäß Fig. 1b nach rechts, wie dies durch den Bewegungspfeil 31a angedeutet ist. Dabei durchläuft die Anordnung einen Zwischenzustand Z, in welchem die Eingangswelle 2 einerseits über ihre Außenverzahnung 11, die korrespondierende Innenverzahnung der Schalthülse (in der Darstellung nicht sichtbar), die Außenverzahnung 16 der Schalthülse 12 und die korrespondiere Innenverzahnung 25 der Ausnehmung 9 mit der Ausgangswelle 3 verbunden ist und andererseits über die Außenverzahnung 11, die korrespondierende Innenverzahnung (in der Darstellung nicht sichtbar) der Schalthülse 12, die Außenverzahnung 16 der Schalthülse 12 und die korrespondiere Innenverzahnung 26 der Koppelhülse 20 mit den Federelementen 24 und damit über das Gehäuse 6 mit der Karosserie 4.

Durch diese doppelte Kopplung der Eingangswelle 2, sowohl mit der Ausgangswelle 3, als auch drehweich mit der Karosserie 4 wird erreicht, dass die Eingangswelle 3 und damit das Lenkrad 31 zu keinem Zeitpunkt frei drehbar ist oder zum Zeitpunkt des Umschaltens von der ersten Schaltstellung I in die zweite Schaltstellung II abrupt blockiert. Um ein abruptes Blockieren zu vermeiden ist die Schaltzeit für das Durchlaufen des Zwischenzustandes Z so bemessen, dass in dieser Zeit das Lenkrad nicht so weit gedreht werden kann, dass die Koppelhülse 20 von ihrer Mittelposition bis zum Ende der Nut 22 gedreht würde, also an den Anschlag gelangt. Auf diese Weise bleibt ein nahezu natürliches Lenkgefühl für die lenkende Person (nicht dargestellt) erhalten, weil der für die Betätigung des Lenkbetätigungsmechanismus 33 (Fig. 2) erforderlichen Kraft lediglich eine zusätzliche, mit zunehmendem Drehwinkel des Lenkrades 30 ansteigende Kraft überlagert wird.

Mit zunehmender Bewegung der Schalthülse 12 in Richtung auf die zweite Schaltstellung II gelangt die Außenverzahnung 16 der Schalthülse 12 außer Eingriff mit der Innenverzahnung 25 in der Ausnehmung 9. So dass bei Drehen der Eingangswelle 2 (des Lenkrades 30) das Lenkgefühl, das der lenkenden Person (nicht dargestellt) vermittelt wird, alleine durch die Kraft der Federelemente 24 bestimmt ist. Der Zeitpunkt zu dem die Schalthülse 12 außer Eingriff mit der Ausgangswelle 3 gelangt, wird durch das Maß bestimmt, das die Schalthülse 12 in ihrer axialen Ausdehnung größer ist als der axiale Abstand von Ausgangswelle 3 und Koppelhülse 20. Die drehweiche Kopplung der Eingangswelle 2 mit der Karosserie 4 bleibt so lange bestehen, wie sich die Kupplung 1 in der in Fig. 1c dargestellten Schaltstellung II befindet. Wird durch eine entsprechende Beaufschlagung des Aktors 19 durch die Steuereinheit 32 (Fig. 2) mit einem entsprechenden Schaltsignal ein Umschalten von der zweiten Schaltstellung II in die erste Schaltstellung I initiiert, läuft der vorstehend beschriebene Vorgang wie durch den zweiten Richtungspfeil 31b (Fig. 1c) angedeutet, in umgekehrter Richtung und Reihenfolge ab. Um Wiederholungen zu vermeiden wird auf eine detaillierte Beschreibung dieses Rückschaltvorgangs verzichtet und stattdessen auf die vorstehenden Ausführungen verwiesen.

Um das Zusammenwirken der Kupplung 1 mit den übrigen Komponenten des Lenksystems deutlich zu machen, ist in Fig. 2 ein solches Lenksystem in vereinfachter Prinzipdarstellung beispielhaft gezeigt. Das Lenksystem ist, wie bereits oben erwähnt, in einem hier in Teildarstellung angedeuteten Personenkraftwagen 5 eingebaut und weist die vorstehend beschriebene Kupplung 1 auf, die mit ihrem Gehäuse 6 an der Karosserie 4 befestigt ist. An der Eingangsseite der Kupplung 1 ist die Eingangswelle 2 angeordnet. Auf der Ausgangsseite die Ausgangswellen 3. Eingangswelle 2 und Ausgangswelle 3 sind an der Karosserie 4 drehbar gelagert. An dem der Kupplung 1 abgewandten Ende der Eingangswelle 2 ist ein Lenkrad 30 angebracht, über das Lenkbewegungen, wie durch einen Drehbewegungspfeil 40 angedeutet, eingegeben werden können. Das Lenkrad 30 verfügt über Zusatzkomponenten 38, dabei kann es sich um einen Airbag, Schaltelemente und/ oder Anzeigeelemente handeln. Diese sind über eine die Eingangswelle mehrfach umschlingende Kabelverbindung an die Steuereinheit 32 angeschlossen. Die Kabelverbindung 37 ist dabei so ausgeführt, dass sie Lenkbewegungen durch Aufwickeln und Abwickeln zulässt. Der Winkelbereich, innerhalb dessen das Lenkrad 30 gedreht werden kann und die Drehung durch das erwähnte Aufwickeln und Abwickeln aufgefangen wird, ist nachfolgend als Wickelreserve bezeichnet. Weiter ist ein die Drehbewegung der Eingangswelle abtastender Sensor 34 vorgesehen, der den Drehwinkel der Eingangswelle 2 permanent an die Steuereinheit 32 übermittelt.

Die Ausgangswelle 3 wirkt mit ihrem der Kupplung 1 abgewandten Ende auf einen Lenktrieb 44, der Teil des Lenkbetätigungsmechanismus 33 ist. Der Lenkbetätigungsmechanismus 33 ist an der Karosserie 4 gestellfest angeordnet. Bei dem Lenktrieb 44 kann es sich um eine direkte Lenkanordnung in Form eines Lenkgetriebes oder um ein Servolenkgetriebe oder um eine Überlagerungslenkanordnung handeln. Weiter enthält der Lenkbetätigungsmechanismus 33 im gewählten Beispiel eine Zahnstange 41, die jeweils endseitig mit Spurstangen 35 verbunden ist, wobei die Spurstangen mit ihrem jeweils anderen Ende an Lenkhebeln 42 angreifen, die auf die an der Karosserie 4 drehbar befestigte Radaufhängung 43 wirken, derart, dass durch die Linearbewegung der Zahnstange 41 ein Lenkwinkel auf die Radaufhängung 43 und damit die Räder 36 übertragen wird. Die Steer-by-Wire Funktion wird im gewählten Beispiel durch einen Steer-by-Wire Antrieb 39 realisiert, der ebenfalls Teil des Lenkbetätigungsmechanismus 33 ist und auf die Zahnstange 41 wirkt und der bidirektional mit der Steuereinheit 32 verbunden ist. Durch die bidirektionale Verbindung ist der Steer-by-Wire Antrieb 39 einerseits von der Steuereinheit 32 ansteuerbar um einen bestimmten Lenkwinkel an den Rädern 36 einzustellen, andererseits liefert er von einem in dem Steer-by-Wire Antrieb 39 enthaltenen Sensor (nicht dargestellt) Sensordaten über den eingestellten Lenkwinkel.

Wie eingangs bereits ausgeführt, soll mittels des Lenksystems gemäß dem Beispiel nach Fig. 2 einerseits ein Normal-Steuerbetrieb realisiert werden, bei dem der Lenkradwinkel die den Lenkwinkel an den Rädern 36 bestimmende Größe ist und andererseits eine Steer-by-Wire Funktion, bei welcher der Lenkwinkel an den Rädern 36 mittels der Steuereinheit 32 vorgegeben wird und von dem Lenkradwinkel völlig unabhängig ist. Hierzu sind beim Wechsel vom Normal-Steuerbetrieb in die Steer-by-Wire Funktion und umgekehrt von der Steer-by-Wire Funktion zurück in den Normal-Steuerbetrieb einige Bedingungen zu erfüllen. Für die nachfolgenden Ausführungen ist angenommen, dass die Umschaltung vom Normal-Steuerbetrieb in die Steer-by-Wire Funktion nur dann erfolgt, wenn entweder ein automatisiertes Fahrmanöver ausgeführt werden soll, um zum Beispiel das Fahrzeug automatisch in eine Parklücke einzuparken oder wenn in einer Notsituation ein Lenkeingriff in vom Fahrer nicht beherrschbaren Situationen durch die Steuereinheit 32 aufgrund von vorliegenden Sensordaten vorgenommen werden muss, um zum Beispiel einen Unfall zu vermeiden oder dessen Folgen zu mildern.

Unter der Annahme, dass sich das Lenksystem im Normal-Steuerbetrieb befindet, erfolgt eine Umschaltung unabhängig von dem augenblicklich anliegenden Lenkwinkel und damit auch unabhängig von dem diesen bestimmenden Lenkradwinkel. Der Umschaltvorgang besteht im Wesentlichen im vorstehend in Verbindung mit Fig. 1a bis Fig. 1c beschriebenen Umschalten der Kupplung 1 von dem ersten Schaltzustand (Schaltstellung I) in den zweiten Schaltzustand (Schaltstellung II). Erst nach Beendigung dieses Schaltzustandswechsels setzt, gesteuert durch die Steuereinheit 32 die Steer-by-Wire Funktion ein und bewegt mittels des Steer-by-Wire Antriebs 39 die Zahnstange 41 in Abhängigkeit von der Fahrzeugbewegung, stellt also in Abhängigkeit von der Fahrzeugbewegung den für die Ausführung des Fahrmanövers erforderlichen Lenkwinkel ein.

Ist das Fahrmanöver ausgeführt, erfolgt die Rückschaltung der Kupplung 1 vom zweiten Schaltzustand (Schaltstellung II) in den ersten Schaltzustand (Schaltstellung I) durch die Steuereinheit 32. Hier sind zwei Fälle zu unterscheiden, eine reguläre Rückschaltung und eine Notrückschaltung. Im Falle einer regulären Rückschaltung überprüft die Steuereinheit 32 über den Sensor 34 den augenblicklich anliegenden Lenkradwinkel und regelt den Lenkwinkel mittels des Steer-by-Wire Antriebs 39 auf einen Lenkwinkel ein, der dem augenblicklich anliegenden Lenkradwinkel entspricht, erst dann erfolgt die Umschaltung der Kupplung 1 von Schaltstellung I in Schaltstellung II (vgl. Fig. 1a bis Fig. 1c). Auf diese Weise ist sichergestellt, dass die Eingangswelle 2 und damit das Lenkrad 30 nicht verdreht mit der Ausgangswelle 3 gekoppelt wird. Da während der Synchronisation von Lenkwinkel und Lenkradwinkel eine Lenkbewegung der Räder 36 erfolgt, ist dieser Vorgang bevorzugt im Fahrzeugstillstand auszuführen, idealerweise auch bei nicht betätigtem Lenkrad, da dieses ja in Schaltstellung II um plus/minus 10° drehbar ist.

Wie vorstehend erwähnt kann der Fall eintreten, dass bei im zweiten Schaltzustand befindlicher Kupplung 1 die Steuerbarkeit des Personenkraftwagens 5 mittel des Lenkrades 30 augenblicklich wieder hergestellt werden muss. Dies kann beispielsweise nach einem Ausweichmanöver mittels der Steer-by-Wire Funktion der Fall sein oder dann wenn die Steer-by-Wire Funktion ausfällt. Im Falle einer solchen Notrückschaltung vom zweiten Schaltzustand (Schaltstellung II) in den ersten Schaltzustand (Schaltstellung I) muss aus Sicherheitsgründen auf eine Synchronisation von Lenkwinkel und Lenkradwinkel verzichtet werden, statt dessen erfolgt die Rückschaltung auf den ersten Schaltzustand der Kupplung 1 ohne Lenkbewegung der Räder 36 und ohne Zeitverzug. Es muss zwar bei einer solchen Notrückschaltung in Kauf genommen werden, dass nach erfolgter Notrückschaltung das Lenkrad verdreht ist, der Personenkraftwagen 5 bleibt aber durchgängig steuerbar.

Selbstverständlich kann nach einer Notrückschaltung, wie sie vorstehend beschrieben ist, beim nächsten Stillstand des Personenkraftwagens 5 und gegebenenfalls nach Fortfall der Störung eine Synchronisation von Lenkwinkel und Lenkradwinkel durchgeführt werden, indem die Kupplung 1 zunächst gesteuert durch die Steuereinheit 32 vom ersten Schaltzustand (Schaltstellung I) in den zweiten Schaltzustand (Schaltstellung II) gebracht wird, die Steuereinheit 32 sodann über den Sensor 34 den augenblicklich anliegenden Lenkradwinkel erfasst und dann den Lenkwinkel mittels des Steer-by-Wire Antriebs 39 auf einen Lenkwinkel einregelt, der dem augenblicklich anliegenden Lenkradwinkel entspricht. Erfolgt in dieser Stellung die Umschaltung der Kupplung 1 von Schaltstellung II auf Schaltstellung I (vgl. Fig. 1a bis Fig. 1c) ist die Verdrehung des Lenkrades aufgehoben.

Im Hinblick auf die Notrückschaltung vom zweiten Schaltzustand (Schaltstellung II) in den ersten Schaltzustand (Schaltstellung I) ist hinsichtlich der Auslegung der Wickelreserve zu beachten, dass die Wickelreserve, also der Bereichs innerhalb dessen das Lenkrad 30 gedreht werden kann und die Drehung durch das erwähnte Aufwickeln und Abwickeln aufgefangen wird, die maximal mögliche Verdrehung des Lenkrades 30 bei einer Notrückschaltung vom zweiten Schaltzustand (Schaltstellung II) in den ersten Schaltzustand (Schaltstellung I) mit abdecken muss.

## Patentansprüche

1. Lenksystem für ein Fahrzeug, umfassend eine Eingangswelle (2), über die eine Lenkkraft von einem Lenkelement eingegeben wird, eine Ausgangswelle (3), die auf einen Lenkbetätigungsmechanismus wirkt, eine Kupplung (1), um die Eingangswelle (2) und die Ausgangswelle (3) miteinander zu verbinden und voneinander zu trennen und wenigstens einen Aktor (19), mittels dem die Kupplung (1) antreibbar ist, um die Eingangswelle (2) und die Ausgangswelle (3) miteinander zu koppeln und zu entkoppeln, wobei die Ausgangswelle (3) im entkoppelten Zustand relativ zur Eingangswelle (2) unabhängig drehbar ist, derart, dass ein von einer Steuereinheit (32) steuerbarer Steer-by-Wire Antrieb (39) vorgesehen ist, der gesteuert durch die Steuereinheit (32) auf den Lenkbetätigungsmechanismus (33) den Lenkwinkel bestimmend einwirkt und wobei die Eingangswelle (2) und die Ausgangswelle (3) im gekoppelten Zustand drehfest miteinander verbunden sind, wobei das Lenksystem so ausgebildet ist, dass die Kupplung (1) mittels des durch die Steuereinheit (32) gesteuerten wenigstens einen Aktors (19) in zwei diskrete Schaltzustände bringbar ist, wobei die Kupplung (1) im ersten Schaltzustand die Eingangswelle (2) und die Ausgangswelle (3) drehfest miteinander verbindet und im zweiten Schaltzustand die Eingangswelle (2) einerseits von der Ausgangswelle (3) entkoppelt und andererseits die Eingangswelle (2) durch direkte oder indirekte Kopplung relativ zu einem feststehenden Teil des Fahrzeug (5) festlegt, und wobei die Ausgangswelle (3) im zweiten Schaltzustand unabhängig von der Eingangswelle mittels des Steer-by-Wire Antrieb (39) gesteuert durch die Steuereinheit (32) drehbar ist, **dadurch gekennzeichnet, dass** die direkte oder indirekte Kopplung zwischen der Eingangswelle (2) und dem feststehenden Teil des Fahrzeug (5) im zweiten Schaltzustand mittels wenigstens eines zwischen der Eingangswelle (2) und dem feststehenden Teil des Fahrzeug (5) wirkenden Federmechanismus drehweich ausgebildet ist derart, dass die Eingangswelle (2) mittels des mit ihr verbundenen Lenkelementes um einen vorgegebenen Winkelbetrag in beide Drehrichtungen gegen die Kraft des wenigstens einen Federmechanismus drehbar ist und bei Drehung über diesen Winkelbetrag hinaus an mit dem feststehenden Teil des Fahrzeug (5) direkt oder indirekt verbundene Anschläge gelangt.

2. Lenksystem nach Anspruch 1, **dadurch gekennzeichnet, dass** der vorgegebene Winkelbetrag größer als 5° und kleiner als 15° ist.

3. Lenksystem nach Anspruch 1 oder 2, **dadurch gekennzeichnet, dass** die Kupplung (1) so ausgebildet ist, dass sie beim Übergang vom ersten Schaltzustand in den zweiten Schaltzustand und umgekehrt, in einem während des Umschaltens dynamisch durchlaufenen Zwischenbereich (Z) zwischen dem ersten Schaltzustand und dem zweiten Schaltzustand die Eingangswelle (2) und die Ausgangswelle (3) drehfest miteinander verbindet und die Eingangswelle (2) relativ zu dem feststehenden Teil des Fahrzeug (5) festlegt, derart, dass die Eingangswelle (2) zu keinem Zeitpunkt frei drehbar ist.

4. Lenksystem nach Anspruch 3, **dadurch gekennzeichnet, dass** das Durchlaufen des Zwischenbereichs (Z) zeitlich so bemessen ist, dass bei einem Schaltvorgang von dem ersten Schaltzustand in den zweiten Schaltzustand, bei Anliegen einer Lenkkraft an der Eingangswelle (2) die mit dem feststehenden Teil des Fahrzeug (5) drehweich gekoppelte Eingangswelle (2) nicht an die Anschläge gelangt.

5. Lenksystem nach einem der vorhergehenden Ansprüche, **dadurch gekennzeichnet, dass** im Normalbetrieb die Steuereinheit (32) beim Wechsel von dem zweiten Schaltzustand in den ersten Schaltzustand die Winkelstellung der Ausgangswelle (3) auf die Winkelstellung der Eingangswelle (2) synchronisiert, derart, dass der Steer-by-Wire Antrieb (39), gesteuert durch die Steuereinheit (32), den Lenkbetätigungsmechanismus (33) auf die mittels wenigstens eines Sensors (34) ermittelte Winkelstellung der Eingangswelle (2) einstellt und dass dann die Steuereinheit (32) durch Ansteuern des wenigstens einen Aktors (19) die Kupplung (1) in den ersten Schaltzustand bringt, und dass das Umschalten von dem zweiten Schaltzustand in den ersten Schaltzustand bei Stillstand des Fahrzeugs (5) und/ oder der Eingangswelle (2) erfolgt.

6. Lenksystem nach einem der vorhergehenden Ansprüche, **dadurch gekennzeichnet, dass** eine Notumschaltung von dem zweiten Schaltzustand in den ersten Schaltzustand vorgesehen ist, wobei nach Auslösen der Notumschaltung die Steuereinheit (32), unabhängig von der Winkelstellung der Eingangswelle (2), durch Ansteuern des wenigstens einen Aktors (19) die Kupplung (1) in den ersten Schaltzustand bringt, und/oder dass die Kupplung (1) die jeweilige Verbindung in dem ersten Schaltzustand oder dem zweiten Schaltzustand per Formschluss oder per Reibschluss oder per Kraftschluss herstellt, und/oder dass die Kupplung (1) wenigstens ein Schaltelement aufweist, wobei die Kupplung mittels des wenigstens einen Schaltelementes im ersten Schaltzustand die Eingangswelle (2) und die Ausgangswelle (3) drehfest miteinander verbindet und im zweiten Schaltzustand die Eingangswelle (2) einerseits von der Ausgangswelle (3) entkoppelt und andererseits mittels des wenigstens einen Schaltelementes die Eingangswelle (2) relativ zu einem feststehenden Teil des Fahrzeug (5) festlegt.

7. Lenksystem nach Anspruch 6, **dadurch gekennzeichnet, dass** die Kupplung zwei Schaltelemente aufweist, wobei das erste Schaltelement im ersten Schaltzustand die Eingangswelle und die Ausgangswelle drehfest miteinander verbindet und im zweiten Schaltzustand die Verbindung zwischen Eingangswelle und die Ausgangswelle löst und das zweite Schaltelement im zweiten Schaltzustand die Eingangswelle relativ zu einem feststehenden Teil des Fahrzeug festlegt und im ersten Schaltzustand diese Verbindung löst.

8. Lenksystem nach Ansprüchen 6 oder 7, **dadurch gekennzeichnet, dass** das wenigstens eine Schaltelement mittels des wenigstens einen Aktors (18) betätigbar ist.

9. Lenksystem nach einem der vorhergehenden Ansprüche, **dadurch gekennzeichnet, dass** der wenigstens eine Aktor (19) einen kraftentfaltenden Antrieb aufweist der einer der Gruppen elektrischer Antrieb, mechanischer Antrieb, pneumatischer Antrieb, hydraulischer Antrieb oder pyrotechnischer Antrieb angehört.

## Claims

1. Steering system for a vehicle, comprising an input shaft (2), via which a steering force is input from a steering member, an output shaft (3), which acts on a steering operating mechanism, a clutch (1) for connecting the input shaft (2) and the output shaft (3), and separating them from each other, and at least one actuator (19), by means of which the clutch(1) can be actuated, in order to couple and decouple the input shaft (2) and the output shaft (3) to and from each other, wherein in the decoupled state the output shaft (3) is independently rotatable relative to the input shaft (2), in such a way that a steer-by-wire drive (39) that can be controlled by a control unit (32) is provided which, controlled by the control unit (32), acts on the steering operating mechanism (33) in a manner determining the steering angle, and wherein in the coupled state the input shaft (2) and the output shaft (3) are connected to one another in a rotationally fixed manner, wherein the steering system is configured in such a way that the clutch (1) can be brought into two discrete switching states by means of the at least one actuator (19) controlled by the control unit (32), wherein in the first switching state the clutch (1) connects the input shaft (2) and the output shaft (3) to one another in a rotationally fixed manner and in the second switching state on the one hand decouples the input shaft (2) from the output shaft (3) and on the other hand fixes the input shaft (2) relative to a fixed part of the vehicle (5) by direct or indirect coupling, and wherein the output shaft (3) in the second switching state is rotatable independently of the input shaft by means of the steer-by-wire drive (39) controlled by the control unit (32), **characterised in that** the direct or indirect coupling between the input shaft (2) and the fixed part of the vehicle (5) in the second switching state is configured by means of at least one spring mechanism acting between the input shaft (2) and the fixed part of the vehicle (5) so as to be torsionally soft, in such a way that the input shaft (2) is rotatable by means of the steering element connected with it by a predetermined angular amount in both directions of rotation against the force of the at least one spring mechanism and, in the event of rotation beyond this angular amount, reaches stops directly or indirectly connected to the fixed part of the vehicle (5).

2. Steering system according to claim 1, **characterised in that** the predetermined angular amount is greater than 5° and less than 15°.

3. Steering system according to claim 1 or 2, **characterised in that** the clutch (1) is configured in such a way that, during the transition from the first switching state to the second switching state and vice versa, it connects the input shaft (2) and the output shaft (3) to one another in a rotationally fixed manner in an intermediate region (Z) between the first switching state and the second switching state, which region is passed through dynamically during the changeover, and fixes the input shaft (2) relative to the fixed part of the vehicle (5) in such a way that the input shaft (2) is at no time freely rotatable.

4. Steering system according to claim 3, **characterised in that** the passage through the intermediate region (Z) is timed in such a way that, during a switching operation from the first switching state to the second switching state, when a steering force is applied to the input shaft (2), the input shaft (2), which is coupled in a torsionally soft manner to the fixed part of the vehicle (5), does not reach the stops.

5. Steering system according to any one of the preceding claims, **characterised in that** in normal operation the control unit (32) synchronises the angular position of the output shaft (3) with the angular position of the input shaft (2) when changing from the second switching state to the first switching state, in such a way that the steer-by-wire drive (39), controlled by the control unit (32), sets the steering operating mechanism (33) to the angular position of the input shaft (2) determined by means of at least one sensor (34), and **in that** the control unit (32) then brings the clutch (1) into the first switching state by actuating the at least one actuator (19), and **in that** the switchover from the second switching state to the first switching state takes place when the vehicle (5) and/or the input shaft (2) is stationary.

6. Steering system according to any one of the preceding claims, **characterised in that** an emergency switchover from the second switching state into the first switching state is provided, wherein after triggering of the emergency switchover the control unit (32), irrespective of the angular position of the input shaft (2), brings the clutch (1) into the first switching state by actuating the at least one actuator (19), and/or **in that** the clutch (1) establishes the respective connection in the first switching state or the second switching state by positive engagement or by frictional engagement or by force engagement, and/or in that the clutch (1) has at least one switching element, wherein the clutch, by means of the at least one switching element, connects the input shaft (2) and the output shaft (3) to one another in a rotationally fixed manner in the first switching state and, in the second switching state, on the one hand decouples the input shaft (2) from the output shaft (3) and, on the other hand, fixes the input shaft (2) relative to a fixed part of the vehicle (5) by means of the at least one switching element.

7. Steering system according to claim 6, **characterised in that** the coupling has two switching elements, wherein the first switching element in the first switching state connects the input shaft and the output shaft to one another in a rotationally fixed manner and in the second switching state releases the connection between the input shaft and the output shaft and the second switching element in the second switching state fixes the input shaft relative to a fixed part of the vehicle and in the first switching state releases this connection.

8. Steering system according to claims 6 or 7, **characterised in that** the at least one switching element can be operated by means of the at least one actuator (18).

9. Steering system according to anyone of the preceding claims, **characterised in that** the at least one actuator (19) has a power-generating drive which belongs to one of the groups of electric drive, mechanical drive, pneumatic drive, hydraulic drive or pyrotechnic drive.

## Revendications

1. Système de direction pour un véhicule, comprenant un arbre d'entrée (2) par l'intermédiaire duquel une force de direction d'un élément de direction est introduite, un arbre de sortie (3) qui agit sur un mécanisme d'actionnement de direction, un couplage (1) destiné à relier l'arbre d'entrée (2) et l'arbre de sortie (3) l'un à l'autre et à les séparer l'un de l'autre, et au moins un actionneur (19) au moyen duquel le couplage (1) peut être entraîné afin d'accoupler et de désaccoupler l'arbre d'entrée (2) et l'arbre de sortie (3) l'un par rapport à l'autre, dans lequel l'arbre de sortie (3) peut tourner indépendamment de l'arbre d'entrée (2) à l'état désaccouplé, de telle manière qu'un entraînement à commandes électriques (39) pouvant être commandé par une unité de commande (32) est prévu qui, en étant commandé grâce à l'unité de commande (32), agit sur le mécanisme d'actionnement de direction (33) d'une manière qui détermine l'angle de braquage, et dans lequel l'arbre d'entrée (2) et l'arbre de sortie (3) sont reliés l'un à l'autre de manière solidaire en rotation dans l'état accouplé, dans lequel le système de direction est réalisé de sorte que le couplage (1) peut être placé dans deux états de commutation discrets au moyen du au moins un actionneur (19) commandé grâce à l'unité de commande (32), dans lequel le couplage (1) relie l'arbre d'entrée (2) et l'arbre de sortie (3) l'un à l'autre de manière solidaire en rotation dans le premier état de commutation et, dans le second état de commutation, désaccouple l'arbre d'entrée (2) par rapport à l'arbre de sortie (3) d'une part et immobilise l'arbre d'entrée (2) par rapport à une partie fixe du véhicule (5) par accouplement direct ou indirect d'autre part, et dans lequel, dans le second état de commutation, l'arbre de sortie (3) peut tourner indépendamment de l'arbre d'entrée de manière commandée au moyen de l'entraînement à commandes électriques (39) grâce à l'unité de commande (32), **caractérisé en ce que** le couplage direct ou indirect entre l'arbre d'entrée (2) et la partie fixe du véhicule (5) dans le second état de commutation est réalisé de manière à être souple en rotation au moyen d'au moins un mécanisme à ressort agissant entre l'arbre d'entrée (2) et la partie fixe du véhicule (5) de telle manière que l'arbre d'entrée (2) peut tourner, au moyen de l'élément de direction auquel il est relié, dans les deux sens de rotation à l'encontre de la force du au moins un mécanisme à ressort à raison d'une quantité angulaire prédéfinie et, dans le cas d'une rotation au-delà de ladite quantité angulaire, parvient au niveau de butées reliées de manière directe ou indirecte à la partie fixe du véhicule (5).

2. Système de direction selon la revendication 1, **caractérisé en ce que** la valeur angulaire prédéfinie est supérieure à 5° et inférieure à 15°.

3. Système de direction selon la revendication 1 ou 2, **caractérisé en ce que** le couplage (1) est réalisé de sorte que, lors du passage du premier état de commutation au second état de commutation et inversement, il relie l'arbre d'entrée (2) et l'arbre de sortie (3) l'un à l'autre de manière solidaire en rotation dans une plage intermédiaire (Z) traversée de manière dynamique lors de la commutation et située entre le premier état de commutation et le second état de commutation, et de sorte qu'il immobilise l'arbre d'entrée (2) par rapport à la partie fixe du véhicule (5) de telle manière que l'arbre d'entrée (2) ne peut tourner librement à aucun moment.

4. Système de direction selon la revendication 3, **caractérisé en ce que** la traversée de la plage intermédiaire (Z) est dimensionnée dans le temps de sorte que, lors d'une opération de passage du premier état de commutation au second état de commutation, l'arbre d'entrée (2) couplée de manière souple en rotation à la partie fixe du véhicule (5) ne parvient pas au niveau des butées lors de l'application d'une force de direction à l'arbre d'entrée (2).

5. Système de direction selon l'une quelconque des revendications précédentes, **caractérisé en ce que**, en fonctionnement normal, l'unité de commande (32) synchronise la position angulaire de l'arbre de sortie (3) avec la position angulaire de l'arbre d'entrée (2) lors du passage du second état de commutation au premier état de commutation de telle manière que, en étant commandé grâce à l'unité de commande (32), l'entraînement à commandes électriques (39) ajuste le mécanisme d'actionnement de direction (33) sur la position angulaire de l'arbre d'entrée (2) déterminée au moyen d'au moins un capteur (34), et **en ce que** l'unité de commande (32) amène ensuite le couplage (1) dans le premier état de commutation grâce à un pilotage du au moins un actionneur (19), et **en ce que** le passage du second état de commutation au premier état de commutation intervient lorsque le véhicule (5) et/ou l'arbre d'entrée (2) est/sont à l'arrêt.

6. Système de direction selon l'une quelconque des revendications précédentes, **caractérisé en ce qu**'une commutation d'urgence du second état de commutation au premier état de commutation est prévue, dans lequel, après le déclenchement de la commutation d'urgence, l'unité de commande (32) amène le couplage (1) dans le premier état de commutation indépendamment de la position angulaire de l'arbre d'entrée (2) grâce à un pilotage du au moins un actionneur (19), et/ou en ce que le couplage (1) crée par complémentarité de forme ou par friction ou par complémentarité de force la liaison respective existant dans le premier état de commutation ou dans le second état de commutation, et/ou en ce que le couplage (1) présente au moins un élément de commutation, dans lequel, dans le premier état de commutation, le couplage relie l'arbre d'entrée (2) et l'arbre de sortie (3) l'un à l'autre de manière solidaire en rotation au moyen du au moins un élément de commutation et, dans le second état de commutation, désaccouple l'arbre d'entrée (2) par rapport à l'arbre de sortie (3) d'une part et immobilise l'arbre d'entrée (2) par rapport à une partie fixe du véhicule (5) au moyen du au moins un élément de commutation d'autre part.

7. Système de direction selon la revendication 6, **caractérisé en ce que** le couplage présente deux éléments de commutation, dans lequel, dans le premier état de commutation, le premier élément de commutation relie l'arbre d'entrée et l'arbre de sortie l'un à l'autre de manière solidaire en rotation et, dans le second état de commutation, interrompt la liaison entre l'arbre d'entrée et l'arbre de sortie, et, dans le second état de commutation, le second élément de commutation immobilise l'arbre d'entrée par rapport à une partie fixe du véhicule et, dans le premier état de commutation, interrompt ladite liaison.

8. Système de direction selon la revendication 6 ou 7, **caractérisé en ce que** le au moins un élément de commutation peut être actionné au moyen du au moins un actionneur (18).

9. Système de direction selon l'une quelconque des revendications précédentes, **caractérisé en ce que** le au moins un actionneur (19) présente un entrainement à étalement de force appartenant au groupe comprenant entrainement électrique, entrainement mécanique, entrainement pneumatique, entrainement hydraulique, ou entrainement pyrotechnique.
